(19) Europäisches Patentamt European Patent Office Office européen des brevets

(11) **EP 4 187 298 A1**

(12) **EUROPEAN PATENT APPLICATION**

(43) Date of publication:
**31.05.2023 Bulletin 2023/22**

(21) Application number: **22209395.7**

(22) Date of filing: **24.11.2022**

(51) International Patent Classification (IPC):
**G02B 6/44** (2006.01)    **G02B 6/52** (2006.01)

(52) Cooperative Patent Classification (CPC):
**G02B 6/4433; G02B 6/4438;** G02B 6/52

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **24.11.2021 IN 202111054328**

(71) Applicant: **Sterlite Technologies Limited
Haryana 122002 (IN)**

(72) Inventor: **SINGH PANWAR, Sourabh
Gurugram 122002 (IN)**

(74) Representative: **Petraz, Gilberto Luigi et al
GLP S.r.l.
Viale Europa Unita, 171
33100 Udine (IT)**

(54) **OPTICAL FIBRE CABLE FOR AIR BLOWING INSTALLATION**

(57) The present disclosure relates to an optical fibre cable (100) for air blowing installation. optical fibre cable 100 comprises a plurality of optical fibres (102), a sheath (104) and one or more strength members (106). Particularly, the sheath (104) envelops the plurality of optical fibres (102). Moreover, one or more strength members (106) are embedded in the sheath (104). Furthermore, one or more strength members (106) embedded in the sheath (104) provides a blowing ratio to the optical fibre cable (100) in a range of about 20 to 45. Further, the blowing ratio is a ratio of the cross-sectional area of the sheath (104) to the cross-sectional area of one or more strength members (106).

Fig. 2

Processed by Luminess, 75001 PARIS (FR)

EP 4 187 298 A1

**Description**

**TECHNICAL FIELD**

Embodiments of the present disclosure relate to the field of optical fiber cable and more particularly, relate to an optical fibre cable for air blowing installation with embedded strength members.

This application claims the benefit of Indian Application No 202111054328 titled "Optical fibre cable for air blowing installation" filed by the applicant on 24/11/2021, which is incorporated herein by reference in its entirety.

**BACKGROUND ART**

Telecommunications networks include access networks where end-user subscribers connect to service providers. With the advancement of science and technology, various modern technologies are being employed for communication purposes.

To meet increasing consumer demands, bandwidth requirements for providing high speed data and video services over access networks are growing rapidly. Some such networks utilize fiber-optic distribution infrastructures, which have historically provided sufficient availability of fiber strands such that dissimilar types of optical transport signals are carried over their own different fibers. Being one of the most important modern communication technologies, the optical fiber communication technology uses a variety of optical fiber cables. Optical fiber cables utilize optical fibers to transmit signals such as voice, video, image, data or information. Optical fibers are used in many applications where light needs to be transmitted from a light source to a remote location. For example, an optical communication system relays light over a fiber optic network to transmit light from a service provider to a system end user.

An optical fiber (i.e., a glass fiber typically surrounded by one or more coating layers) conventionally includes an optical fiber core, which transmits and/or amplifies an optical signal, and an optical cladding, which confines the optical signal within the core. Accordingly, the refractive index of the core nc is typically greater than the refractive index of the optical cladding ng (i.e., nc>ng).

Conventional techniques and processes for manufacturing optical fibers generally involve drawing the optical fiber down along a straight path throughout the manufacturing stage. In general, the optical fiber is manufactured by drawing glass or plastic to a diameter slightly thicker than that of human hair. An optical glass "preform" is the source material from which an optical fiber is drawn, typically by heating the preform and pulling glass from the bottom to form the optical fiber. Additionally, the optical fiber cables may be manufactured with a high optical fiber count for high-speed communication purposes.

Fibre optic cables are commonly deployed in ducts (e.g., ducts having an outer diameter of about 42 millimeters). Traditional duct installation, however, uses space inefficiently. The typical capacity of such ducts has been one cable per duct, although in some cases two cables have been installed.

Two different types of optical fiber cables are ribbon cables and cables with individual optical fibers, either loose-tube, or tightly buffered. Advantages of ribbon cables include: (1) they allow for easy MPO connectorization; (2) they are relatively easy to mass splice; and (3) they provide for lower skew than cables with individual fibers. To prevent or reducing overbending, cable strength member can be placed in the cable cover(ing) of fiber optic cables together with optical fiber It is interior. However, optical fiber can be engaged and wound with strength member, so as to fibre-optical bending in cable cover(ing) and be made to be carried on optical fiber Optical signal attenuation. Strength layers and/or strength members add mechanical strength to fiber optic cables to protect the internal optical fibers against stresses applied to the cables during installation and thereafter. Example strength layers/strength members include aramid yarn, steel, glass-reinforced plastic (GRP), and epoxy reinforced glass roving.

Currently, high fiber count optical cables are manufactured with IBR with no rigid strength member present inside a core of the optical cable to maximize free space inside the optical cable. In addition, the strength members are embedded inside a sheath of the optical cables to achieve required tensile strength, stiffness for blowing purpose and environmental tests of the optical cable.

US patent application no. US9069147B2 titled "Optical fiber cables" discloses cables having reduced free space, reduced tube diameters, and reduced strength member diameters. In particular, the cables are designed to pass robustness testing such as GR-20 while using smaller amounts of raw materials to produce.

Chinese patent application no. CN112867952A titled "Optical fiber cable" discloses an optical fiber cable having a plurality of intermittently connected optical fiber ribbons inside a cable sheath, wherein a fibrous insert or FRP using the fibrous insert is provided on at least 1 diagonal line among 2 diagonal directions substantially orthogonal to each other inside the cable sheath. In particular, the fibrous insert has an average coefficient of linear expansion at-40 °C to +70 °C that is less than the average coefficient of linear expansion of the cable sheath at-40 °C to +70 °C.

Japanese patent application no. JP2020197655A titled "Optical fiber cable" discloses an optical fiber cable having suitable flexural rigidity for air pressure feed in an air pressure feed optical fiber cable. In particular, the optical fiber cable 1A comprises: intermittently-coupled type optical fiber ribbons in which coupling parts formed by coupling a portion between adjacent coated optical fibers and non-coupling parts formed by not coupling a portion between adjacent coated optical fibers are intermittently provided in a lengthwise direction in a part of or the whole portion between coated optical fibers; a cable sheath including the plurality of optical fiber ribbons; and two or more tension members provided in such a manner as to be embedded in the cable sheath. Moreover, a flexural rigidity of the optical fiber cable in a radial direction is 0.3 N m2 or more and 1.5 N m2 or less in a whole circumferential direction, and a core wire density obtained by dividing the number of core wires of the coated optical fibers by a cable sectional area is 5.0 core wires/mm2 or more.

However, there are a few drawbacks in the currently similar technologies for manufacturing high fiber count optical cables with IBR with no rigid strength member. In particular, if the strength members are disposed to be twisted around the loose tube, it is difficult to take out the optical fiber from the cable because the tensile strength body becomes an obstacle only by removing the jacket. Moreover, if the strength members are included in the messenger section, it limits the amount of elongation and contraction that can take place by virtue of the connecting web that joins the carrier section to the messenger section.

Accordingly, to overcome the disadvantages of the prior art, there is an urgent need for a technical solution that overcomes the above-stated limitations in the prior arts. The present disclosure focuses on providing an optimized number of embedded strength members inside the sheath of the optical cable

## SUMMARY OF THE DISCLOSURE

Embodiments of the present disclosure provide an optical fibre cable for air blowing installation. In particular, the optical fibre cable comprises a plurality of optical fibres, a sheath and one or more strength members. Moreover, the sheath envelops the plurality of optical fibres. Furthermore, one or more strength members are embedded in the sheath. Further, one or more strength members embedded in the sheath provides a blowing ratio to the optical fibre cable in a range of about 20 to 45. Additionally, the blowing ratio is a ratio of the cross-sectional area of the sheath to the cross-sectional area of one or more strength members.

According to the first aspect of the present disclosure, the plurality of optical fibres corresponds to one of the loose optical fibres, intermittently bonded ribbons, flat optical fibre ribbons, and corrugated optical fibre ribbons.

According to a second aspect of the present disclosure, each of one or more strength members is completely embedded in the sheath.

In accordance with an embodiment of the present disclosure, each of one or more strength members is partially embedded in the sheath.

In accordance with an embodiment of the present disclosure, the number of strength members embedded in the sheath is 4 to 16.

According to a third aspect of the present disclosure, the optical fibre cable is capable of being blown to a distance of at least 1000 meters in a duct, wherein the optical fibre cable is blown in the duct with an average speed of at least 60 meters per minute with air pressure of less than 15 bar with a duct fill ratio of 35% to 65%.

In accordance with an embodiment of the present disclosure, the strength members are embedded symmetrically in the sheath.

In accordance with an embodiment of the present disclosure, the sheath is made of a material that has elastic modulus of at least 350 MPa.

In accordance with an embodiment of the present disclosure, the sheath has a surface, wherein the surface of the sheath is one of a smooth surface, a corrugated surface or a rough surface.

In accordance with an embodiment of the present disclosure, the optical fibre cable has bending stiffness of more than 0.20 Newton per meter square.

According to a fourth aspect of the present disclosure, the optical fibre cable has a coefficient of friction between an outer surface of the sheath and an inner surface of a duct of less than or equal to 0.12.

In accordance with an embodiment of the present disclosure, the optical fibre cable is capable of being blown to a distance of at least 1200 meter in a duct with a duct fill ratio of 35% to 65%.

According to a fifth aspect of the present disclosure, the optical fibre cable with the blowing ratio of 20 to 45 is capable of being blown to a distance of at least 1500 meter in a duct.

The foregoing solutions of the present disclosure are attained by employing an optical fibre cable for air blowing installation with optimized number of embedded strength members inside the sheath of the optical cable.

## BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.

Fig. 1 is a pictorial snapshot illustrating an optical fibre cable in accordance with an embodiment of the present disclosure;

Fig. 2 is a pictorial snapshot illustrating the optical fibre cable, in accordance with an embodiment of the present disclosure; and

Fig. 3 is a pictorial snapshot illustrating the optical fibre cable, in accordance with an embodiment of the present disclosure.

## REFERENCE LIST

Optical fibre cable - 100
Plurality of optical fibres - 102
Sheath - 104
One or more embedded strength members - 106
Plurality of ribs - 108
Plurality of grooves - 110

The optical fiber cable is illustrated in the accompanying drawings, which like reference letters indicate corresponding parts in the various figures. It should be noted that the accompanying figure is intended to present illustrations of exemplary embodiments of the present disclosure. This figure is not intended to limit the scope of the present disclosure. It should also be noted that the accompanying figure is not necessarily drawn to scale.

## DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.
The articles "a", "an" and "the" are used to refer to one or to more than one (i.e., to at least one) of the grammatical object of the article.
The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of element or steps but not the exclusion of any other element or step or group of element or steps.
The term "including" is used to mean "including but not limited to". "Including" and "including but not limited to" are used interchangeably.
Optical fibre is used for transmitting information as light pulses from one end to another. In particular, optical fibre is a thin strand of glass or plastic capable of transmitting optical signals. Moreover, optical fibre is configured to transmit large amount of information over long distances. Furthermore, optical fibre includes a core region and a cladding region. The core region is an inner part of optical fibre and the cladding section is an outer part of optical fibre. Further, the cladding region surrounds the core region.

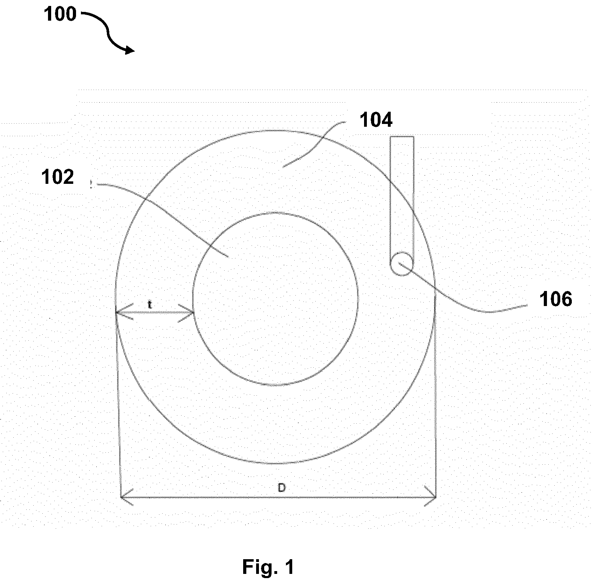

Fig. 1 is a pictorial snapshot illustrating an optical fibre cable 100 in accordance with an embodiment of the present disclosure. In particular, the optical fibre cable 100 includes a plurality of optical fibres 102, a sheath 104, and one or more embedded strength members 106. Moreover, the optical fibre cable 100 is a high fibre count cable having high air blowing performance. Further, the optical fibre cable 100 includes a number of optical fibres bundled together covered with protective plastic sheath.

In accordance with an embodiment of the present disclosure, the optical fibre cable 100 has a diameter D in range of about 7 millimetres to 35 millimetres. In particular, the diameter D of the optical fibre cable 100 may vary.

In accordance with an embodiment of the present disclosure, the optical fibre cable 100 includes the plurality of optical fibres 102. In particular, the plurality of optical fibers 102 corresponds to any of a loose optical fibers, and a bundle of optical fibres. Moreover, the plurality of optical fibres 102 are arranged in at least one form of an intermittent bonded ribbon, a flat optical fiber ribbon, and a corrugated optical fiber ribbon. Furthermore, the ribbons are stacked or rolled to make fiber ribbon groups. Further, number of the plurality of optical fibres 102 in the optical fibre cable 100 is more than 10,000. Additionally, the plurality of optical fibers 102 may be placed inside a tube or grouped together using a binding element.

In accordance with an embodiment of the present disclosure, each of the plurality of optical fibres 102 has a diameter of upto anyone of 260 microns, 160 microns, 185 microns, 200 microns and 250 microns. Additionally, the diameter of the plurality of optical fibres 102 may vary.

Further, the optical fibre cable 100 includes the sheath 104. Particularly, the sheath 104 envelops the plurality of optical fibres 102.

In accordance with an embodiment of the present disclosure, the sheath 104 of the optical fibre cable 100 has a thickness in range of about 1.5 millimetres to 3 millimetres. The thickness of the sheath 104 of the optical fibre cable 100 may vary.

Particularly, the sheath 104 is made of any of a Linear Low Density Polyethylene (LLDPE) material, a Low Density Polyethylene (LDPE) material, a Medium Density Polyethylene (MDPE) material, a High Density Polyethylene (HDPE) material, a thermoplastic polyurethane (TPU) material, a polypropylene (PP) material and any suitable material. Moreover, the sheath 104 has a surface. Further, the surface of the sheath 104 is any one of a smooth surface, a corrugated surface or a rough surface.

In accordance with an embodiment of the present disclosure, the optical fibre cable 100 includes one or more strength members 106. In particular, one or more strength members 106 are embedded in the sheath 104. Moreover, one or more strength members 106 corresponds to the embedded strength members 106. Furthermore, one or more strength members 106 embedded in the sheath 104 provides a blowing ratio in a range of about 20 to 45. The blowing ratio is a ratio of cross-sectional area of the sheath to total cross-sectional area of the embedded strength members 106. Additionally, the blowing ratio may vary. The blowing ratio is calculated as:

$$\text{Blowing Ratio} = \frac{A_2}{n * A_1}$$

wherein,

n = No. of embedded strength members
A1 - cross-sectional area of 1 strength member
A2 - cross-sectional area of the sheath

Further, each of one or more strength members 106 is completely embedded in the sheath 104. Alternatively, each of one or more strength members 106 may be partially embedded in the sheath 104.

Further, one or more strength members 106 are embedded symmetrically in the sheath 104. Furthermore, the sheath 104 is made of a material that has elastic modulus of at least 350 MPa. Furthermore, the sheath 104 may be made of a material that has elastic modulus of around 400 MPa. Further, the sheath 104 may be made of any of an LLDPE material (Linear Low Density Polyethylene), an LDPE material, an HDPE material and an MDPE material. Additionally, each of one or more strength members 106 has a diameter d in range of about 0.5 millimeter to 1 millimeter. And, the diameter d of each of one or more strength members 106 may vary.

In accordance with an embodiment of the present disclosure, each of one or more strength members 106 are made of any of an ARP (Aramid Reinforcement Plastic) material, a FRP (fibre reinforced plastic) material and any suitable material of the like. In particular, number of the strength members 106 embedded in the sheath 104 is optimized. Moreover, the number of one or more strength members 106 is optimized irrespective of the number of the plurality of optical fibres 102 in the optical fibre cable 100. Furthermore, the minimum number of the embedded strength members 106 required in the sheath 104 and an area wise is calculated by a formula. The formula is represented as:

$$(\text{Area of PE})_1 / (\text{Area of ARP}) \times n_1 = (\text{Area of PE})_2 / (\text{Area of ARP}) \times n_2$$

Where,

> PE refers Polyethylene material of sheath 104;
> Area of PE refers to area of the sheath 104;
> ARP refers to Aramid Reinforcement Plastic material of one or more strength members 106;
> Area of ARP refers to the area of one strength member 106;
> "n" refers to number of the embedded strength members 106.

In an exemplary example, diameter d of the ARP (one strength member) is equal to 0.5 mm and $n_1$ is equal to 10. In particular, the outer diameter D of the optical fibre cable 100 is about 13 millimeter. The outer diameter D of the optical fibre cable 100 may vary. Moreover, the sheath 104 has a thickness t of about 2 millimeter. The thickness t of the sheath 104 may vary. Furthermore, the area of PE is equal to 69.115 millimeter square and area of one ARP is equal to 0.196 square millimeter. Furthermore, the blowing ratio is calculated as 35. In addition, the diameter d is equal to 1 mm and $n_2$ is equal to 11. Further, the diameter D of the optical fibre cable 100 is equal to 35 mm and the thickness t of the sheath 104 is equal to 3 mm. Further, the area of PE is equal to 301.59 $mm^2$ and area of one ARP is equal to 0.785 $mm^2$. The area wise ratio is calculated as 35. From the above formula, since the (Area of PE)$_2$ is known, $n_2$ can be calculated.

From the above example, it is concluded that the optical fibre cable 100 meets tensile requirement, efficient blowing performance and passes environmental test if the ratio of PE area to ARPs area is around 35. In particular, the ratio range may be defined from 20 to 45.

In accordance with an embodiment of the present disclosure, the optical fibre cable 100 passes a temperature cycling test. Particularly, the temperature cycling test is performed to mechanically and optically withstand from effects of positive and negative temperature changes in a range of -40 to +70 degree Celsius. Moreover, the temperature cycling test is carried out in a temperature controlled chamber with a soak time of 0.5 to 24 hours at both the extreme temperature conditions for at least 2 cycles. Furthermore, the optical fibre cable 100 has a tensile strength of more than 1000 Newton. The tensile strength of the optical fibre cable 100 may vary.

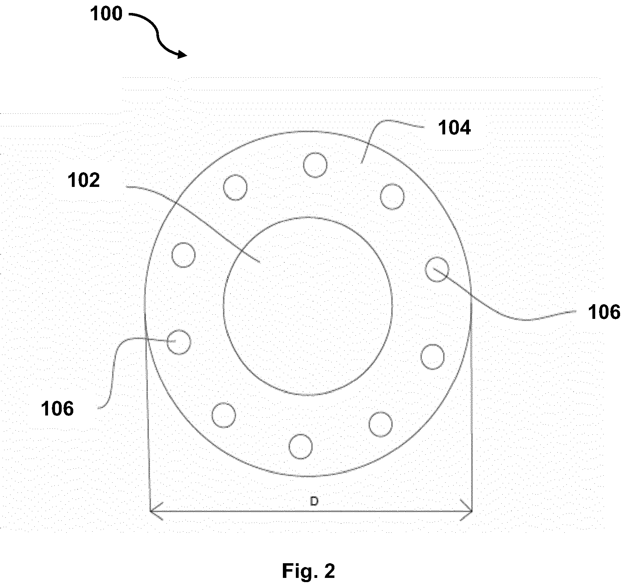

Fig. 2 is a pictorial snapshot illustrating the optical fibre cable 100, in accordance with an embodiment of the present disclosure. In particular, the optical fibre cable 100 includes the plurality of optical fibres 102, the sheath 104, and one or more embedded strength members 106. Moreover, the number of one or more embedded strength members 106 is 10. Furthermore, the number of one or more strength members 106 is 8. Furthermore, the number of the embedded strength members 106 may be in range of about 8 to 10. Further, the number of the embedded strength members 106 may be in range of 4 to 16. Additionally, the number of the embedded strength members 106 may vary. And, the optical fibre cable 100 has the diameter D in range of about 7 millimetres to 35 millimetres. The diameter D of the optical fibre cable 100 may vary.

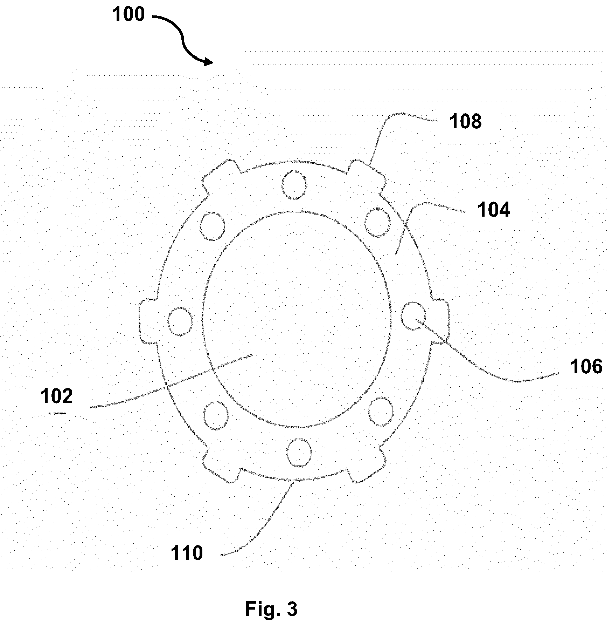

Fig. 3 is a pictorial snapshot illustrating the optical fibre cable, in accordance with an embodiment of the present disclosure. In particular, the optical fibre cable 100 is a ribbed and grooved cable. Moreover, the sheath 104 includes an inner surface and an outer surface. Furthermore, the sheath is an outer layer of a cable that protects the cable from environmental conditions. Further, the environment conditions may include but are not limited to rainfall, sunlight, snowfall, and wind. Further, the outer surface of the sheath 104 is a smooth surface. Additionally, the outer surface of the sheath 104 may have a corrugated surface. And, the outer surface of the sheath 104 may have a rough surface.

In accordance with an embodiment of the present disclosure, the sheath 104 of the cable 100 includes a plurality of ribs 108 and a plurality of grooves 110. In particular, the plurality of ribs 108 and the plurality of grooves 110 are formed on the outer surface of the sheath 104. Moreover, number of the plurality of ribs 108 is same as number of the plurality of grooves 110. Furthermore, the plurality of ribs 108 and the plurality of grooves 110 reduce coefficient of friction between the sheath 104 and a duct. Further, the optical fibre cable 100 has a coefficient of friction between an outer surface of the sheath 104 and an inner surface of a duct of less than or equal to 0.12. The coefficient of friction may vary.

In accordance with an embodiment of the present disclosure, the plurality of ribs 108 and the plurality of grooves 110 are arranged alternately to each other on the outer surface of the sheath 104.

In an exemplary example, a groove of the plurality of grooves 110 is present on both sides of each rib of the plurality of ribs 108.

In an exemplary example, a rib of the plurality of ribs 108 is present on both sides of each groove of the plurality of grooves 110. In particular, the height of each of the plurality of ribs 108 is equal. Moreover, the height of each of the plurality of grooves 110 is equal.

In accordance with an embodiment of the present disclosure, the optical fibre cable 100 has bending stiffness of more than 0.20 Newton per meter square. The bending stiffness of the optical fibre cable 100 may vary. In particular, the optical fibre cable 100 is capable of being blown to a distance of at least 1000 meters in the duct. Moreover, the optical fibre cable 100 is blown in the duct with an average speed of at least 60 meters per minute with air pressure of less than 15 bar with a duct fill ratio of 35% to 65%. Furthermore, the duct fill ratio is the ratio between cable and duct size. Additionally, the duct fill ratio is the ratio between cross sectional area of cable and inner space of the duct and is calculated as:

$$DFR = \frac{d^2}{D^2} \times 100$$

where,

d= cable diameter;
D= duct inner diameter.

Further, the optical fibre cable 100 is capable of being blown to a distance of at least 1200 meter in the duct with the duct fill ratio of 35% to 65%. The duct fill ratio may vary. Furthermore, the optical fibre cable 100 with the blowing ratio of 20 to 45 is capable of being blown to a distance of at least 1500 meter in the duct. And, the optical fibre cable 100 has the tensile strength of more than 1000 Newton.

The present disclosure of the optical fibre cable 100 for air blowing installation advantageously provides the optical fibre cable 100 with high tensile strength. In particular, the optical fibre cable 100 has high blowing performance. Moreover, the optical fibre cable 100 has an optimized number of one or more embedded strength members 106 inside the sheath 104 of the optical fiber cable 100.

The present disclosure of the unbonded armored optical fibre cable 100 and the manufacturing method thereof obtained by the proposed disclosure advantageously provides an unbonded armored optical fibre cable 100. In particular, the bonding between the outer sheath 112 and the metallic layer 108 in the optical fibre cable 100 is prevented.

A person of ordinary skill in the art may be aware that, in combination with the examples described in the embodiments disclosed in this specification, units and algorithm steps may be implemented by electronic hardware, computer software, or a combination thereof.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

Disjunctive language such as the phrase "at least one of X, Y, Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

In a case that no conflict occurs, the embodiments in the present disclosure and the features in the embodiments may be mutually combined. The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure.

**Claims**

1. An optical fibre cable (100) for air blowing installation **characterized in that**:

   a plurality of optical fibres (102);
   a sheath (104), wherein the sheath (104) envelops the plurality of optical fibres (102); and
   one or more strength members (106), wherein the one or more strength members (106) are embedded in the sheath (104),
   wherein the one or more strength members (106) embedded in the sheath (104) provides a blowing ratio to the optical fibre cable (100) in a range of about 20 to 45,
   wherein the blowing ratio is a ratio of cross-sectional area of the sheath (104) to cross-sectional area of the one or more strength members (106).

2. The optical fibre cable (100) as claimed in claim 1, wherein the plurality of optical fibres (102) corresponds to one of loose optical fibres, intermittently bonded ribbons, flat optical fibre ribbons, and corrugated optical fibre ribbons

3. The optical fibre cable (100) as claimed in claim 1, wherein each of the one or more strength members (106) is completely embedded in the sheath (104).

4. The optical fibre cable (100) as claimed in claim 1, wherein each of the one or more strength members (106) is partially embedded in the sheath (104).

5. The optical fibre cable (100) as claimed in claim 1, wherein number of the strength members (106) embedded in the sheath (104) is 4 to 16.

6. The optical fibre cable (100) as claimed in claim 1, wherein the optical fibre cable (100) is capable of being blown to a distance of at least 1000 meters in a duct.

7. The optical fibre cable (100) as claimed in claim 1, wherein the optical fibre cable (100) is blown in the duct with an average speed of at least 60 meters per minute with air pressure of less than 15 bar with a duct fill ratio of 35% to 65%.

8. The optical fibre cable (100) as claimed in claim 1, wherein the strength members (106) are embedded symmetrically in the sheath (104)

9. The optical fibre cable (100) as claimed in claim 1, wherein the sheath (104) is made of a material that has elastic modulus of at least 350 MPa.

10. The optical fibre cable (100) as claimed in claim 1, wherein the sheath (104) has a surface, wherein the surface of the sheath (104) is one of a smooth surface, a corrugated surface or a rough surface.

11. The optical fibre cable (100) as claimed in claim 1, wherein the optical fibre cable (100) has bending stiffness of more than 0.20 Newton per meter square.

12. The optical fibre cable (100) as claimed in claim 1, wherein the optical fibre cable (100) has a coefficient of friction between an outer surface of the sheath (104) and an inner surface of a duct of less than or equal to 0.12.

13. The optical fibre cable (100) as claimed in claim 1, wherein the optical fibre cable (100) is capable of being blown to a distance of at least 1200 meter in a duct with a duct fill ratio of 35% to 65%.

14. The optical fibre cable (100) as claimed in claim 1, wherein the optical fibre cable (100) with the blowing ratio of 20 to 45 is capable of being blown to a distance of at least 1500 meter in a duct.

15. The optical fibre cable (100) as claimed in claim 1, wherein the optical fibre cable (100) with the blowing ratio of 20 to 45 is capable of being blown to a distance of at least 1500 meter in a duct.

**100**

**104**

**102**

t

**106**

D

**Fig. 1**

**Fig. 2**

Fig. 3

Europäisches
Patentamt

European
Patent Office

Office européen
des brevets

## EUROPEAN SEARCH REPORT

Application Number

EP 22 20 9395

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 879 323 A1 (SUMITOMO ELECTRIC INDUSTRIES [JP]) 15 September 2021 (2021-09-15) | 1-9, 12-15 | INV. G02B6/44 |
| Y | * paragraph [0003] * <br> * paragraph [0005] * <br> * paragraph [0011] * <br> * paragraph [0013] - paragraph [0014] * <br> * paragraph [0024] - paragraph [0025] * <br> * paragraph [0027] - paragraph [0028] * <br> * paragraph [0030] * <br> * paragraph [0032] * <br> * paragraph [0034] - paragraph [0045]; figures 4-6 * | 10,11 | ADD. G02B6/52 |
| A | WO 2020/117547 A1 (CORNING RES & DEV CORP [US]) 11 June 2020 (2020-06-11) <br> * paragraph [0002] * <br> * paragraph [0020] * <br> * paragraph [0040]; figures 1-3 * | 1,4 | |
| Y | US 2007/140631 A1 (PIZZORNO MASSIMO [IT] ET AL) 21 June 2007 (2007-06-21) | 11 | TECHNICAL FIELDS SEARCHED (IPC) |
| A | * paragraph [0043] - paragraph [0044] * <br> * paragraph [0146] - paragraph [0149]; figures 1, 2, 5 * | 1,4 | G02B |
| A | EP 2 579 079 A1 (SICHUAN HUIYUAN OPTICAL COMM CO LTD [CN]) 10 April 2013 (2013-04-10) <br> * paragraph [0004] * <br> * paragraph [0006] - paragraph [0007]; figures 1-8 * | 1,7 | |
| Y | US 9 195 019 B1 (PARRIS DON [IT] ET AL) 24 November 2015 (2015-11-24) | 10 | |
| A | * column 17, line 51 - line 65 * | 1,12 | |

The present search report has been drawn up for all claims

| Place of search | Date of completion of the search | Examiner |
|---|---|---|
| The Hague | 21 March 2023 | Mouget, Mathilde |

EPO FORM 1503 03.82 (P04C01)

**EP 4 187 298 A1**

## ANNEX TO THE EUROPEAN SEARCH REPORT
## ON EUROPEAN PATENT APPLICATION NO.

EP 22 20 9395

This annex lists the patent family members relating to the patent documents cited in the above-mentioned European search report.
The members are as contained in the European Patent Office EDP file on
The European Patent Office is in no way liable for these particulars which are merely given for the purpose of information.

21-03-2023

| Patent document cited in search report | | | Publication date | Patent family member(s) | | | Publication date |
|---|---|---|---|---|---|---|---|
| EP 3879323 | A1 | | 15-09-2021 | CN | 112867952 | A | 28-05-2021 |
| | | | | EP | 3879323 | A1 | 15-09-2021 |
| | | | | US | 2022003949 | A1 | 06-01-2022 |
| | | | | WO | 2020095958 | A1 | 14-05-2020 |
| WO 2020117547 | A1 | | 11-06-2020 | AU | 2019394773 | A1 | 24-06-2021 |
| | | | | CA | 3122088 | A1 | 11-06-2020 |
| | | | | CN | 113366357 | A | 07-09-2021 |
| | | | | EP | 3891543 | A1 | 13-10-2021 |
| | | | | US | 2021389537 | A1 | 16-12-2021 |
| | | | | WO | 2020117547 | A1 | 11-06-2020 |
| US 2007140631 | A1 | | 21-06-2007 | AT | 556341 | T | 15-05-2012 |
| | | | | AU | 2003260331 | A1 | 25-02-2005 |
| | | | | BR | 0318404 | A | 01-08-2006 |
| | | | | CN | 1802582 | A | 12-07-2006 |
| | | | | DK | 1664876 | T3 | 18-06-2012 |
| | | | | EP | 1664876 | A1 | 07-06-2006 |
| | | | | ES | 2386434 | T3 | 21-08-2012 |
| | | | | US | 2007140631 | A1 | 21-06-2007 |
| | | | | WO | 2005015280 | A1 | 17-02-2005 |
| EP 2579079 | A1 | | 10-04-2013 | CN | 102183830 | A | 14-09-2011 |
| | | | | CN | 102183831 | A | 14-09-2011 |
| | | | | CN | 102183832 | A | 14-09-2011 |
| | | | | CN | 201698065 | U | 05-01-2011 |
| | | | | EP | 2579079 | A1 | 10-04-2013 |
| | | | | KR | 20120086353 | A | 02-08-2012 |
| | | | | WO | 2011150787 | A1 | 08-12-2011 |
| US 9195019 | B1 | | 24-11-2015 | US | 8625944 | B1 | 07-01-2014 |
| | | | | US | 9195019 | B1 | 24-11-2015 |

EPO FORM P0459

## REFERENCES CITED IN THE DESCRIPTION

**Patent documents cited in the description**

- IN 202111054328
- US 9069147 B2
- CN 112867952 A
- JP 2020197655 A